(19) Europäisches Patentamt
European Patent Office
Office européen des brevets

(11) **EP 4 682 698 A1**

(12) **EUROPEAN PATENT APPLICATION**
published in accordance with Art. 153(4) EPC

(43) Date of publication:
**21.01.2026 Bulletin 2026/04**

(21) Application number: **24777871.5**

(22) Date of filing: **21.03.2024**

(51) International Patent Classification (IPC):
*G06F 3/06* (2006.01)

(52) Cooperative Patent Classification (CPC):
**G06F 3/06**

(86) International application number:
**PCT/CN2024/083063**

(87) International publication number:
**WO 2024/199082 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 CN 202310379505**

(71) Applicant: **Huawei Technologies Co., Ltd.
Shenzhen, Guangdong 518129 (CN)**

(72) Inventors:
• **HU, Jinyuan
Wuhan, Hubei 430074 (CN)**
• **LIU, Haikun
Wuhan, Hubei 430074 (CN)**
• **LI, Guangcheng
Shenzhen, Guangdong 518129 (CN)**
• **SUN, Hongwei
Shenzhen, Guangdong 518129 (CN)**
• **ZHANG, Hongjun
Shenzhen, Guangdong 518129 (CN)**

(74) Representative: **Maiwald GmbH
Elisenhof
Elisenstraße 3
80335 München (DE)**

(54) **DATA MANAGEMENT SYSTEM, METHOD, AND APPARATUS, DEVICE, AND CONTROLLER**

(57) This application belongs to the field of storage technologies, and discloses a data management system, method, apparatus, and device, and a controller. The data management system includes a controller, a first storage medium, and a second storage medium. An access speed of the first storage medium is lower than an access speed of the second storage medium, the second storage medium includes a first part and a second part, the first part is a cache for the first storage medium, and the first storage medium and the second part are not caches. The controller is configured to obtain target data that needs to be managed; and is further configured to manage the target data by using a target storage medium, where the target storage medium is a storage medium, corresponding to the target data, in the first storage medium, the first part, and the second part. The data management system provided in this application can enable coexistence of a parallel architecture and a hierarchical architecture, implement dynamic switching between the parallel architecture and the hierarchical architecture, and therefore can meet, with high applicability, access requirements of various different types of applications.

FIG. 3

**Description**

This application claims priority to Chinese Patent Application No. 202310379505.2, filed on March 31, 2023 and entitled "DATA MANAGEMENT SYSTEM, METHOD, APPARATUS, AND DEVICE, AND CONTROLLER", which is incorporated herein by reference in its entirety.

**TECHNICAL FIELD**

This application relates to the field of storage technologies, and in particular, to a data management system, method, apparatus, and device, and a controller.

**BACKGROUND**

This application provides a data management system, method, apparatus, and device, and a controller, to manage data. The technical solutions provided in this application include the following aspects.

According to a first aspect, a data management system is provided. The data management system includes a controller, a first storage medium, and a second storage medium. An access speed of the first storage medium is lower than an access speed of the second storage medium. In other words, the first storage medium is a slow storage, and the second storage medium is a fast storage. The second storage medium includes a first part and a second part, the first part is a cache for the first storage medium, and the first storage medium and the second part are not caches. Therefore, the first storage medium and the second part are separately used as a main memory to store different data, and the first part caches a part of data stored in the first storage medium. The controller is configured to obtain target data that needs to be managed; and is further configured to manage the target data by using a target storage medium, where the target storage medium is a storage medium, corresponding to the target data, in the first storage medium, the first part, and the second part.

The data management system is an architecture in which a parallel architecture and a hierarchical architecture coexist. The first storage medium and the second part form the parallel architecture, and the first storage medium and the first part form an architecture that can be dynamically switched between the parallel architecture and the hierarchical architecture. When the first part does not cache any data stored in the first storage medium, the first storage medium and the first part form the parallel architecture. With continuous use of the data management system, the first part gradually starts to cache a part of data stored in the first storage medium, and the first storage medium and the first part are switched from the parallel architecture to the hierarchical architecture. However, with continual use of the data management system, the first part no longer needs to continue to cache the part of cached data, and the first storage medium and the first part are switched from the hierarchical architecture to the parallel architecture. In addition, a process of dynamic switching between the parallel architecture and the hierarchical architecture can be completed when the data management system is normally used.

For an application with strong locality, the parallel architecture may be switched to the hierarchical architecture, so that more hot data is cached in the first part. The first part has a high access speed, and therefore can meet a high access speed required by the application with strong locality. For an application with weak locality, the hierarchical architecture may be switched to the parallel architecture, so that less hot data is cached in the first part. The first part occupies a small capacity in the second storage medium, and the second part may occupy a large capacity in the second storage medium. This can increase a main memory capacity, and meet a large main memory capacity required by the application with the weak locality.

In a possible implementation, the controller is configured to: obtain first hotness information corresponding to the target data, where the first hotness information indicates whether the target data is hot data; and manage the target data based on the first hotness information by using the target storage medium, where the target storage medium is the first part, or the target medium is the first storage medium and the first part. In this implementation, the target data is managed based on the first hotness information of the target data. This helps ensure management accuracy, and meet access requirements of various applications.

In a possible implementation, the controller is configured to: receive a target instruction, obtain a first address according to the target instruction, and determine data corresponding to the first address as the target data, where the target instruction may be an access instruction used to access data, or may be an instruction dedicated to data management; determine, when the first address is within an address range of the first storage medium, a reference value based on a quantity of access times of the target data, reference duration, and a first threshold, where the reference duration is a difference between a receiving moment of the target instruction and a moment at which the target data is accessed last time, and the reference duration is less than the first threshold; and determine, when the reference value is greater than a second threshold, that the first hotness information indicates that the target data is hot data, or determine, when the reference value is less than or equal to a third threshold, that the first hotness information indicates that the target data is cold data, where the third threshold is less than or equal to the second threshold. The quantity of access times, the reference duration, and the first threshold are comprehensively considered for determining the reference value. Therefore, the determined reference value is accurate, and the first hotness information determined based on the reference value is also accurate.

In a possible implementation, the controller is configured to: determine historically accessed data as the target data, where the target data corresponds to a first address, and the first address is within an address range of the first storage medium; and determine, when duration for which the target data is not accessed reaches a fourth threshold, that the first hotness information indicates that the target data is cold data. In this implementation, management of the target data does not need to be triggered by using a target instruction, and the historically accessed data is used as the target data that needs to be managed.

In a possible implementation, the controller is configured to: query an address mapping table according to the first address corresponding to the target data, to obtain a query result; and delete, when the first hotness information indicates that the target data is cold data and the query result indicates that the first address corresponds to a second address in an address range of the first part, the target data cached at the second address; and the controller is further configured to delete, from the address mapping table, a target mapping relationship between the first address and the second address.

Because the target data is cold data, it indicates that the target data does not need to be cached by using the first part. Because the query result indicates that the first address corresponds to the second address, it indicates that the target data has been cached in the first part. Therefore, it indicates that the cold target data no longer needs to be cached by using the first part, and the controller needs to delete the target data cached at the second address, so as to reserve more capacity in the first part for caching other hot data. In addition, the controller further needs to delete, from the address mapping table, an entry corresponding to the target data, so as to indicate the first part not to cache the target data.

In a possible implementation, the controller is configured to: when the first hotness information indicates that the target data is cold data, the query result indicates that the first address corresponds to the second address in the address range of the first part, and the query result further indicates that the target data is dirty data, write the target data cached at the second address into the first address, and then delete the target data cached at the second address.

Because the target data is the dirty data, it indicates that the target data is modified after the first part caches the target data. In other words, the target data stored at the first address in the first storage medium is inconsistent with the target data cached at the second address in the first part. Therefore, the target data cached at the second address needs to be first written into the first address, and then the target data cached at the second address is deleted, to ensure consistency of data in the first storage medium and the first part. In this application, the controller can maintain consistency of data in the first storage medium and the first part, and overheads are low.

In a possible implementation, the controller is configured to: delete, when the first hotness information indicates that the target data is cold data, the query result indicates that the first address corresponds to the second address in the address range of the first part, and the query result further indicates that the target data is clean data, the target data cached at the second address.

Because the target data is the clean data, it indicates that the target data is not modified after the first part caches the target data. In this case, the target data stored at the first address in the first storage medium and the target data cached at the second address in the first part are originally consistent data. Therefore, the target data cached at the second address is directly deleted, and the target data does not need to be written into the first address in the first storage medium.

In a possible implementation, the controller is configured to: query an address mapping table according to the first address corresponding to the target data, to obtain a query result; and cache, when the first hotness information indicates that the target data is hot data and the query result indicates that the first address does not correspond to a second address in an address range of the first part, the target data at the second address; and the controller is further configured to add a target mapping relationship between the first address and the second address to the address mapping table.

Because the target data is hot data, it indicates that the target data needs to be cached by using the first part. Because the query result indicates that the first address does not correspond to the second address, it indicates that the target data is not cached in the first part. Therefore, it indicates that the hot target data needs to be cached by using the first part. In this case, the controller reads the target data from the first storage medium, and caches the target data at the second address, so that the first part caches the target data. This helps implement quick access of the target data subsequently by using the first part. In addition, the controller further needs to add, to the address mapping table, an entry corresponding to the target data, to indicate that the target data is cached in the first part.

In a possible implementation, the controller is configured to: add the target mapping relationship to a queue with a lowest priority in a plurality of queues, where the target mapping relationship corresponds to second hotness information, and the second hotness information indicates a hot level of the target data; and update a location of the target mapping relationship in the plurality of queues based on an update status of the second hotness information until the target mapping relationship is added to a queue with a highest priority in the plurality of queues, and then add the target mapping relationship to the address mapping table.

In this manner, the target mapping relationship is not added to the address mapping table directly, but the target mapping relationship is added to the address mapping table after being buffered in a buffer. This can avoid not only a case in which the address mapping table is filled with only burst hot data but cannot cache a mapping relationship corresponding to normal hot data, but also a case in which an entry in the address mapping table is frequently replaced, increase a cache hit rate, and reduce overheads such as time and energy consumption.

In a possible implementation, the controller is configured to: obtain a reference mapping relationship from a queue with a lowest priority in a plurality of queues, and replace the reference mapping relationship in the address mapping table with the target mapping relationship, where the reference mapping relationship is transferred from a queue with a non-lowest priority in the plurality of queues to the queue with the lowest priority in the plurality of queues.

In this manner, the reference mapping relationship is not replaced directly, but the reference mapping relationship is replaced by the target mapping relationship after being buffered in a buffer. This can avoid frequent replacement of an entry in the address mapping table, increase a cache hit rate, and reduce overheads such as time and energy consumption.

In a possible implementation, the controller is configured to: query an address mapping table according to the first address corresponding to the target data, to obtain a query result; and continue, when the first hotness information indicates that the target data is hot data and the query result indicates that the first address corresponds to a second address in an address range of the first part, to cache the target data at the second address; and the controller is further configured to update second hotness information corresponding to a target mapping relationship between the first address and the second address, where the second hotness information indicates a hot level of the target mapping relationship.

Because the target data is hot data, it indicates that the target data needs to be cached by using the first part. Because the query result indicates that the first address corresponds to the second address, it indicates that the target data has been cached in the first part. Therefore, there is no need to adjust a cache status of the target data, so that the target data is still cached at the second address. There is no need to replace each entry in the address mapping table, and only the second hotness information corresponding to the target mapping relationship needs to be updated. Updating the second hotness information is to make the target mapping relationship less easily replaced by another mapping relationship.

According to a second aspect, a data management method is provided. The data management method is applied to a controller included in a data management system, the data management system further includes a first storage medium and a second storage medium, an access speed of the first storage medium is lower than an access speed of the second storage medium, the second storage medium includes a first part and a second part, the first part is a cache for the first storage medium, and the first storage medium and the second part are not caches. The data management method includes: obtaining target data that needs to be managed; and managing the target data by using a target storage medium, where the target storage medium is a storage medium, corresponding to the target data, in the first storage medium, the first part, and the second part.

In a possible implementation, managing the target data by using the target storage medium includes: obtaining first hotness information corresponding to the target data, where the first hotness information indicates whether the target data is hot data; and managing the target data based on the first hotness information by using the target storage medium, where the target storage medium is the first part, or the target medium is the first storage medium and the first part.

In a possible implementation, obtaining the first hotness information corresponding to the target data includes: receiving a target instruction, obtaining a first address according to the target instruction, and determining data corresponding to the first address as the target data; determining, when the first address is within an address range of the first storage medium, a reference value based on a quantity of access times of the target data, reference duration, and a first threshold, where the reference duration is a difference between a receiving moment of the target instruction and a moment at which the target data is accessed last time, and the reference duration is less than the first threshold; and determining, when the reference value is greater than a second threshold, that the first hotness information indicates that the target data is hot data, or determining, when the reference value is less than or equal to a third threshold, that the first hotness information indicates that the target data is cold data, where the third threshold is less than or equal to the second threshold.

In a possible implementation, obtaining the first hotness information corresponding to the target data includes: determining historically accessed data as the target data, where the target data corresponds to a first address, and the first address is within an address range of the first storage medium; and determining, when duration for which the target data is not accessed reaches a fourth threshold, that the first hotness information indicates that the target data is cold data.

In a possible implementation, managing the target data based on the first hotness information by using the target storage medium includes: querying an address mapping table according to the first address corresponding to the target data, to obtain a query result; and deleting, when the first hotness information indicates that the target data is cold data and the query result indicates that the first address corresponds to a second address in an address range of the first part, the target data cached at the second address; and the data management method further includes: deleting, from the address mapping table, a target mapping relationship between the first address and the second address.

In a possible implementation, deleting, when the first hotness information indicates that the target data is cold data and the query result indicates that the first address corresponds to the second address in the address range of the first part, the target data cached at the second address includes: when the first hotness information indicates that the target data is cold data, the query result indicates that the first address corresponds to the second address in the address range of the first part, and the query result further indicates that the target data is dirty data, writing the target data cached at the second address into the first address, and then deleting the target data cached at the second address.

In a possible implementation, deleting, when the first hotness information indicates that the target data is cold data and the query result indicates that the first address corresponds to the second address in the address range of the first part, the target data cached at the second address includes: deleting, when the first hotness information indicates that the target data is cold data, the query result indicates that the first address corresponds to the second address in the address range of the first part, and the query result further indicates that the target data is clean data, the target data cached at the second address.

In a possible implementation, managing the target data based on the first hotness information by using the target storage medium includes: querying an address mapping table according to the first address corresponding to the target data, to obtain a query result; and caching, when the first hotness information indicates that the target data is hot data and the query result indicates that the first address does not correspond to a second address in an address range of the first part, the target data at the second address; and the data management method further includes: adding a target mapping relationship between the first address and the second address to the address mapping table.

In a possible implementation, adding the target mapping relationship between the first address and the second address to the address mapping table includes: adding the target mapping relationship to a queue with a lowest priority in a plurality of queues, where the target mapping relationship corresponds to second hotness information, and the second hotness information indicates a hot level of the target data; and updating a location of the target mapping relationship in the plurality of queues based on an update status of the second hotness information until the target mapping relationship is added to a queue with a highest priority in the plurality of queues, and then adding the target mapping relationship to the address mapping table.

In a possible implementation, adding the target mapping relationship between the first address and the second address to the address mapping table includes: obtaining a reference mapping relationship from a queue with a lowest priority in a plurality of queues, and replacing the reference mapping relationship in the address mapping table with the target mapping relationship, where the reference mapping relationship is transferred from a queue with a non-lowest priority in the plurality of queues to the queue with the lowest priority in the plurality of queues.

In a possible implementation, managing the target data based on the first hotness information by using the target storage medium includes: querying an address mapping table according to the first address corresponding to the target data, to obtain a query result; and continuing, when the first hotness information indicates that the target data is hot data and the query result indicates that the first address corresponds to a second address in an address range of the first part, to cache the target data at the second address; and the data management method further includes: updating second hotness information corresponding to a target mapping relationship between the first address and the second address, where the second hotness information indicates a hot level of the target mapping relationship.

According to a third aspect, a data management apparatus is provided. The data management apparatus is used in a controller included in a data management system, the data management system further includes a first storage medium and a second storage medium, an access speed of the first storage medium is lower than an access speed of the second storage medium, the second storage medium includes a first part and a second part, the first part is a cache for the first storage medium, and the first storage medium and the second part are not caches. The data management apparatus includes: an obtaining module, configured to obtain target data that needs to be managed; and a management module, configured to manage the target data by using a target storage medium, where the target storage medium is a storage medium, corresponding to the target data, in the first storage medium, the first part, and the second part.

In a possible implementation, the management module is configured to: obtain first hotness information corresponding to the target data, where the first hotness information indicates whether the target data is hot data; and manage the target data based on the first hotness information by using the target storage medium, where the target storage medium is the first part, or the target medium is the first storage medium and the first part.

In a possible implementation, the management module is configured to: receive a target instruction, obtain a first address according to the target instruction, and determine data corresponding to the first address as the target data; determine, when the first address is within an address range of the first storage medium, a reference value based on a quantity of access times of the target data, reference duration, and a first threshold, where the reference duration is a difference between a receiving moment of the target instruction and a moment at which the target data is accessed last time, and the reference duration is less than the first threshold; and determine, when the reference value is greater than a second threshold, that the first hotness information indicates that the target data is hot data, or determine, when the reference value is less than or equal to a third threshold, that the first hotness information indicates that the target data is cold data, where the third threshold is less than or equal to the second threshold.

In a possible implementation, the management module is configured to: determine historically accessed data as the target data, where the target data corresponds to a first address, and the first address is within an address range of the first storage medium; and determine, when duration for which the target data is not accessed reaches a fourth threshold, that the first hotness information indicates that the target data is cold data.

In a possible implementation, the management module is configured to: query an address mapping table according to the first address corresponding to the target data, to obtain a query result; and delete, when the first hotness information indicates that the target data is cold data and the query result indicates that the first address corresponds to a second address in an address range of the first part, the target data cached at the second address; and

the management module is further configured to delete, from the address mapping table, a target mapping relationship between the first address and the second address.

In a possible implementation, the management module is configured to: when the first hotness information indicates that the target data is cold data, the query result indicates that the first address corresponds to the second address in the address range of the first part, and the query result further indicates that the target data is dirty data, write the target data cached at the second address into the first address, delete the target data cached at the second address.

In a possible implementation, the management module is configured to: delete, when the first hotness information indicates that the target data is cold data, the query result indicates that the first address corresponds to the second address in the address range of the first part, and the query result further indicates that the target data is clean data, the target data cached at the second address.

In a possible implementation, the management module is configured to: query an address mapping table according to the first address corresponding to the target data, to obtain a query result; and cache, when the first hotness information indicates that the target data is hot data and the query result indicates that the first address does not correspond to a second address in an address range of the first part, the target data at the second address; and

the management module is further configured to add a target mapping relationship between the first address and the second address to the address mapping table.

In a possible implementation, the management module is configured to: add the target mapping relationship to a queue with a lowest priority in a plurality of queues, where the target mapping relationship corresponds to second hotness information, and the second hotness information indicates a hot level of the target data; and update a location of the target mapping relationship in the plurality of queues based on an update status of the second hotness information until the target mapping relationship is added to a queue with a highest priority in the plurality of queues, and then add the target mapping relationship to the address mapping table.

In a possible implementation, the management module is configured to: obtain a reference mapping relationship from a queue with a lowest priority in a plurality of queues, and replace the reference mapping relationship in the address mapping table with the target mapping relationship, where the reference mapping relationship is transferred from a queue with a non-lowest priority in the plurality of queues to the queue with the lowest priority in the plurality of queues.

In a possible implementation, the management module is configured to: query an address mapping table according to the first address corresponding to the target data, to obtain a query result; and continue, when the first hotness information indicates that the target data is hot data and the query result indicates that the first address corresponds to a second address in an address range of the first part, to cache the target data at the second address; and

the management module is further configured to update second hotness information corresponding to a target mapping relationship between the first address and the second address, where the second hotness information indicates a hot level of the target mapping relationship.

According to a fourth aspect, a data management device is provided. The data management device includes a processor and a data management system, the processor is connected to a controller included in the data management system, and the data management system is the data management system provided in any one of the first aspect or the possible implementations of the first aspect.

According to a fifth aspect, a controller is provided. The controller is configured to perform the data management method provided in any one of the second aspect or the possible implementations of the second aspect.

It should be understood that, for beneficial effect achieved by the technical solutions provided in the second aspect to the fifth aspect of this application and the possible implementations corresponding to the second aspect to the fifth aspect of this application, refer to beneficial effect of the technical solution provided in the first aspect and the possible implementations corresponding to the first aspect. Details are not described herein again.

BRIEF DESCRIPTION OF DRAWINGS

FIG. 1 is a diagram of a parallel architecture according to an embodiment of this application;

FIG. 2 is a diagram of a hierarchical architecture according to an embodiment of this application;

FIG. 3 is a diagram of a data management system according to an embodiment of this application;

FIG. 4 is a diagram of another data management system according to an embodiment of this application;

FIG. 5 is a flowchart of a data management method according to an embodiment of this application;

FIG. 6 is a schematic flowchart of determining cold or hot data according to an embodiment of this application;

FIG. 7 is a diagram of a structure of an entry in an access information table according to an embodiment of this application;

FIG. 8 is a schematic flowchart of data management according to an embodiment of this application;

FIG. 9 is a diagram of a structure of an address mapping table according to an embodiment of this application;

FIG. 10 is a diagram of priority queues according to an embodiment of this application;

FIG. 11 is a diagram of a structure of a data management module according to an embodiment of this application; and

FIG. 12 is a diagram of a structure of a data management device according to an embodiment of this application.

**DESCRIPTION OF EMBODIMENTS**

Terms used in implementations of this application are only used to explain specific embodiments of this application, but are not intended to limit this application.

With booming development of computer multicore (namely, multiple processing cores located in a processor) technologies and various applications, a frequency of accessing a storage medium by the processor based on a request sent by an application is increasingly high. The storage medium is configured to store data, and access to the storage medium includes fetching and storing. Fetching may also be understood as reading, and is used to obtain the data stored in the storage medium. Storage may also be understood as writing, and is used to enable the storage medium to store the data.

The frequency of accessing the storage medium is increasingly high, and therefore the storage medium is required to have better performance. The performance of the storage medium includes but is not limited to storage density, static power consumption, an access speed, and a service life. The storage density is a ratio of storage space occupied by data that can be stored in the storage medium (namely, a capacity of the storage medium) to storage space occupied by the storage medium. The static power consumption is power consumption consumed when the storage medium is not accessed, for example, leakage power consumption and refresh power consumption. The access speed is a speed of accessing the storage medium. A higher speed indicates shorter time for access. The service life is a time period from time when the storage medium is put into use to time when the storage medium is damaged.

A conventional storage medium has advantages of high access speed (also referred to as a fast storage) and long service life, but also has disadvantages of low storage density and high static power consumption. A new storage medium has disadvantages of low access speed (also referred to as a slow storage) and short service life, but has advantages of high storage density, low static power consumption, and byte addressability. Based on this, the fast storage and the slow storage can be combined to form a specific architecture, to fully use respective advantages of the two storage media, and capitalize on complementary strengths of the two storage media.

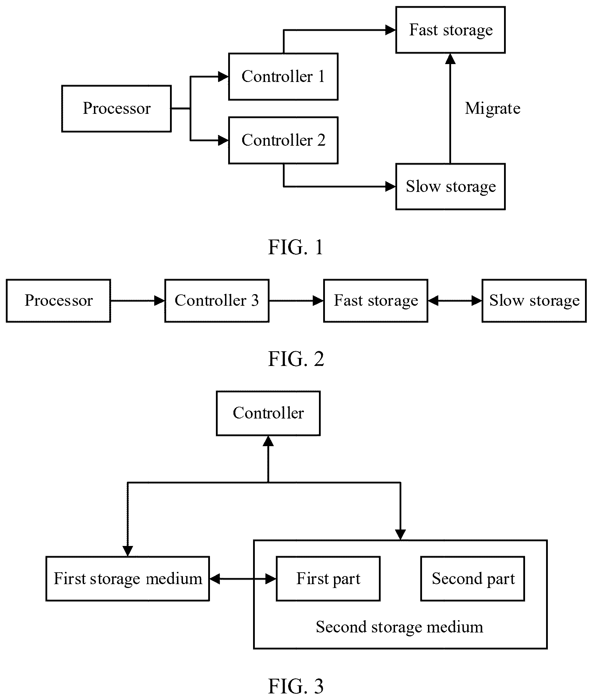

For example, an example architecture is a parallel architecture shown in FIG. 1, and includes a fast storage, a controller 1, a slow storage, and a controller 2. Both the fast storage and the slow storage are not caches (that is, both are used as a main memory), and the two storage media are used to store different data. In the parallel architecture, hot data with a high access frequency is migrated from the slow storage to the fast storage for storage, and the controller 1 accesses the fast storage according to an instruction sent by a processor, to implement quick access of the hot data. After the hot data is migrated from the slow storage to the fast storage, the hot data is stored only in the fast storage instead of the slow storage. In addition, cold data with a low fetching frequency is stored in the slow storage, and the controller 2 accesses the slow storage according to an instruction sent by the processor, to implement access of the cold data.

This parallel architecture is applicable to an application with weak locality, for example, an application related to big data, including but not limited to applications such as a message service framework (message service framework, MSF), breadth first search (breadth first search, BFS), and K-nearest neighbors (k-nearest neighbors, KNN). This is not limited herein. The weak locality means that data having a same value or stored in a same storage location does not need to be frequently accessed.

For another example, another example architecture is a hierarchical architecture shown in FIG. 2, and includes a fast storage, a slow storage, and a controller 3. The slow storage is a non-cache (namely, a main memory), and the fast storage is a cache (cache) of the slow storage. The slow storage is used to store all data, and the fast storage is used to cache hot data among all data. The controller 3 accesses the fast storage according to an instruction sent by a processor, to implement access of data. If data that needs to be accessed is cached in the fast storage, access may be directly completed. If data that needs to be accessed is not cached in the fast storage, the fast storage obtains, from the slow storage, the data that needs to be accessed, and then caches the data, so as to complete access.

This hierarchical architecture has problems of low flexibility and high hardware complexity. In addition, this hierarchical architecture is applicable to an application with strong locality, for example, an application related to an internet, including but not limited to applications such as Astar (a heuristic search algorithm) and a data information communication technology (data information communication technology, DICT). This is not limited herein. Strong locality means that data having a same value or stored in a same storage location needs to be frequently accessed.

In a related technology, if switching from the parallel architecture to the hierarchical architecture is required, or switching from the hierarchical architecture to the parallel architecture is required, a hardware (namely, a storage medium) use mode needs to be reconfigured, and a system running on a device in which hardware is located needs to be restarted. As a result, operation complexity is high. However, if switching is not performed between the parallel architecture and the hierarchical architecture, and one of the parallel architecture and the hierarchical architecture is used alone, an access requirement of only one type of application can be usually met. This is limited and is not applicable enough. For example, if the parallel architecture is used alone, only an access requirement of the application with the weak locality can be met. This access requirement has a low requirement on an access speed (a low access delay is not required), and has a high requirement on a main memory capacity. For another example, if the hierarchical architecture is used independently, only an access requirement of the application with strong locality can be met. This access requirement has a high requirement on an access speed (a low access delay is required), and has a low requirement on a main memory capacity.

Based on this, embodiments of this application provide a data management system. As shown in FIG. 3, the data management system includes a controller, a first storage medium, and a second storage medium. An access speed of the first storage medium is lower than an access speed of the second storage medium. In other words, the first storage medium is a slow storage, and the second storage medium is a fast storage. The second storage medium includes a first part and a second part, the first part is a cache for the first storage medium, and the first storage medium and the second part are not caches. Therefore, the first storage medium and the second part are separately used as a main memory to store different data, the first part caches a part of data stored in the first storage medium, and the part of data may be hot data with a high access frequency. It should be understood that the different data is not necessarily data with different values, or may be data corresponding to different applications, or the like. This is not limited herein.

Therefore, the first storage medium and the second part form a parallel architecture, and the first storage medium and the first part form an architecture that can be dynamically switched between a parallel architecture and a hierarchical architecture. The architecture that can be dynamically switched is described as follows.

In an initial state, that is, when the first part does not cache any data stored in the first storage medium, the first storage medium and the first part form the parallel architecture. With continuous use of the data management system, the first part gradually starts to cache the part of data stored in the first storage medium, for example, the first part caches the hot data, to implement quick access of the hot data, and the first storage medium and the first part are switched from the parallel architecture to the hierarchical architecture. However, with continuous use of the data management system, the first part no longer needs to continue to cache the part of cached data, for example, if the cached hot data in the first part is changed to cold data, the first part no longer needs to continue to cache the cold data, but needs to delete the cold data, to reserve more capacity for caching other hot data, and the first storage medium and the first part are switched from the hierarchical architecture to the parallel architecture. The first storage medium and the first part can be switched from the parallel architecture to the hierarchical architecture, and can also be switched from the hierarchical architecture to the parallel architecture. Therefore, the architecture that can be dynamically switched between the parallel architecture and the hierarchical architecture is formed.

It can be learned that the data management system provided in embodiments of this application can enable coexistence of the parallel architecture and the hierarchical architecture, meet, with high applicability, both an access requirement of an application with weak locality and an access requirement of an application with strong locality. For example, for the application with strong locality, the parallel architecture may be switched to the hierarchical architecture, so that more hot data is cached in the first part. The first part has a high access speed, and therefore can meet the access requirement that has a high requirement on an access speed. For another example, for the application with the weak locality, the hierarchical architecture may be switched to the parallel architecture, so that less hot data is cached in the first part. The first part occupies a small capacity in the second storage medium, and the second part may occupy a large capacity in the second storage medium. This can increase a main memory capacity, and meet the access requirement that has a high requirement on the main memory capacity.

In addition, a process of dynamic switching between the parallel architecture and the hierarchical architecture can be completed when the data management system is normally used. There is no need to reconfigure a hardware (namely, a storage medium) use mode or restart a system running on a device in which hardware is located, as described in the foregoing related technology. This reduces operation complexity.

For example, a sum of a capacity of the first part and a capacity of the second part is less than or equal to a capacity of the second storage medium. The capacity of the first part and the capacity of the second part may be adjusted based on an actual requirement. This is not limited herein.

A controller included in the data management system is a bus circuit controller configured to manage and plan a transmission speed between a processor and a storage medium. One controller may be an independent chip, or may be integrated into another chip. The another chip includes but is not limited to a processor, a northbridge chip, and the like. This is not limited herein.

For example, the first storage medium may be a non-volatile memory (non-volatile memory, NVM), for example, a phase change memory (phase change memory, PCM). In addition, the second storage medium may be a dynamic random access memory (dynamic random access memory, DRAM) or the like. The first storage medium and the second storage medium are not limited in embodiments of this application.

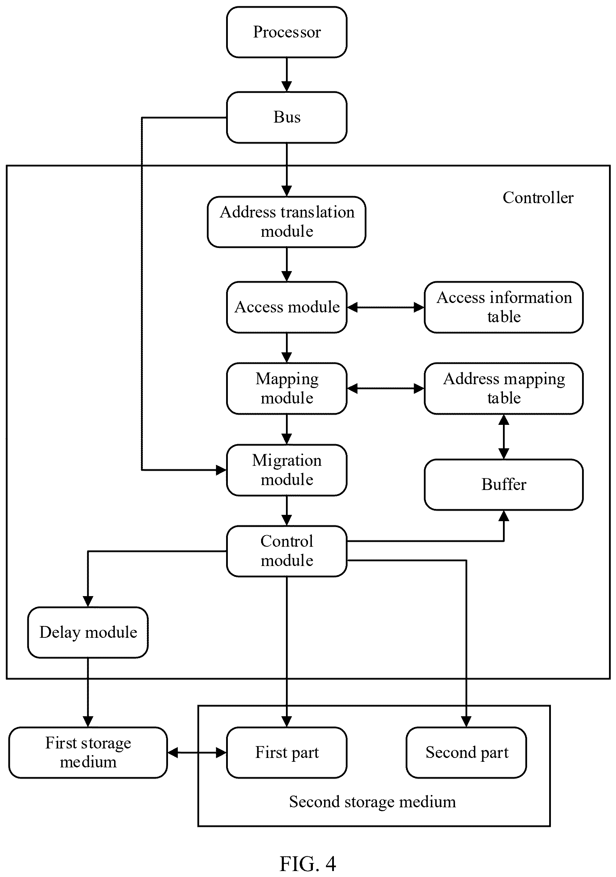

In an example embodiment, modules included in the controller are described with reference to a data management system shown in FIG. 4. The modules in the controller include but are not limited to an address translation module, an access module, a mapping module, a migration module, a control module, a delay module, and a storage module (not shown in FIG. 4), where the storage module includes an access information table, an address mapping table, and a buffer. The buffer is, for example, a first input first out (first input first output, FIFO) queue. This is not limited herein. The address translation module and the migration module may also be connected to a processor through a bus.

That the capacity of the first part and the capacity of the second part may be adjusted based on the actual requirement in the foregoing description may be implemented by using the migration module. For example, the migration module can receive, through the bus, an instruction sent by the processor, and adjust the capacity of the first part and the capacity of the second part in the second storage medium according to the instruction. In addition, the control module can modify related parameters of the first storage medium by using the delay module based on an actual requirement. The related parameters include but are not limited to parameters such as a delay. The related parameters may be obtained by simulating the first storage medium and the second storage medium by using a hardware simulation platform like a field programmable gate array (field programmable gate array, FPGA). Certainly, the modules shown in FIG. 4 further have other functions. For the other functions, refer to descriptions in the following method embodiments. Details are not described herein.

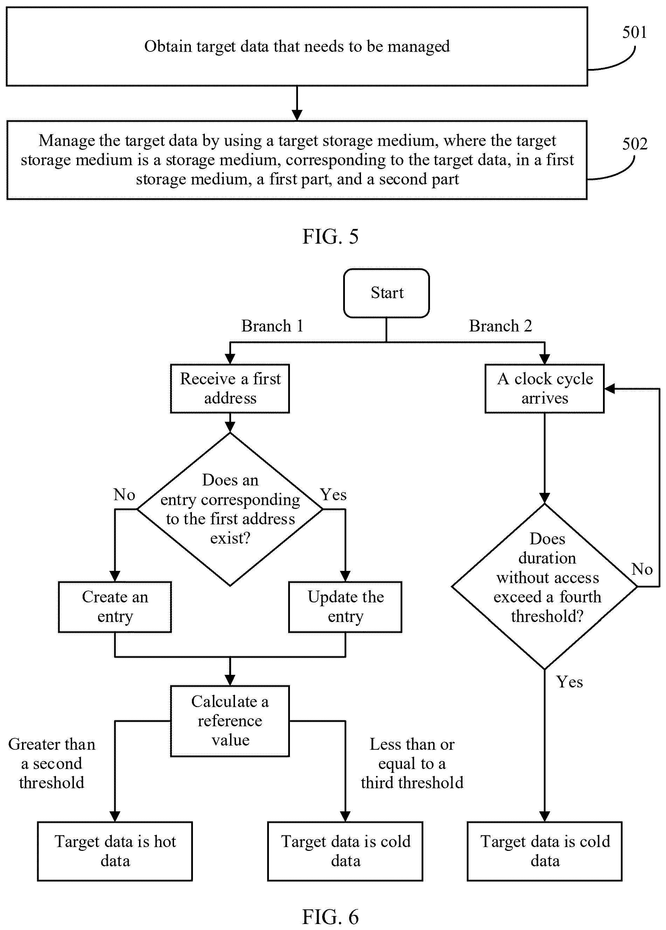

An embodiment of this application provides a data management method. The data management method is applied to the controller included in the data management system shown in FIG. 3 or FIG. 4. As shown in FIG. 5, the method includes the following steps 501 and 502.

Step 501: Obtain target data that needs to be managed.

The controller needs to implement data management, and therefore the controller needs to obtain the target data that needs to be managed. The target data may have a specific unit, or the target data includes at least one unit of data. Each unit of data is a specific data length, and the data length may be set based on an actual requirement. For example, if a length of each unit of data is 64 bytes (byte, B), a length of the target data may be 64B, 128B, 192B, or the like.

In an example embodiment, a manner in which the controller obtains the target data that needs to be managed includes but is not limited to the following Case A1 and Case A2.

Case A1: The controller receives a target instruction, obtains a first address according to the target instruction, and determines data corresponding to the first address as the target data.

Refer to FIG. 4. The processor sends the target instruction to the controller through the bus, and the target instruction carries a logical address. By using the address translation module, the controller receives the target instruction, parses the target instruction to obtain the logical address, then translates the logical address into the first address, where the first address belongs to a physical address, and determines the data corresponding to the first address as the target data.

In some implementations, the target instruction is an access instruction. Therefore, the target instruction is used to access data, the controller uses the data that needs to be accessed as the target data, and it is equivalent to triggering data management when the data is accessed. In addition to the logical address, the target instruction further carries an access identifier, and the access identifier indicates to perform fetching (namely, reading) or storage (namely, writing). When the access identifier indicates to perform fetching, the data corresponding to the first address is data that is stored at the first address and that needs to be read from the first address. When the access identifier indicates to perform storage, the data corresponding to the first address is data that needs to be written into the first address and that is to be stored at the first address. In addition to sending the target instruction to the controller through the bus, the processor further sends, through a bus, the data corresponding to the first address to the controller. The bus used to send the target instruction and the bus used to send the data corresponding to the first address may be different buses or a same bus. In some other implementations, the target instruction carries a logical address but does not carry an access identifier. Therefore, the target instruction may be considered as an instruction dedicated to triggering data management, and it is equivalent to being dedicated to triggering data management. Correspondingly, the data corresponding to the first address may be data stored at the first address.

In an example embodiment, Case A1 further includes the following Case B1 and Case B2.

Case B1: The first address is within an address range of a second part of a second storage medium, that is, within an address range of a fast storage.

Case B2: The first address is within an address range of a first storage medium, that is, within an address range of a slow storage.

For example, in Case B2, each unit of data included in the data (namely, the target data) corresponding to the first address corresponds to one entry in an access information table. The target data includes at least one unit of data, and therefore the first address corresponds to at least one entry in the access information table. The access information table may be maintained by the access module (as shown in FIG. 4) included in the controller. After obtaining the first address according to the target instruction, the address translation module included in the controller sends the first address to the access module. Refer to Branch 1 in FIG. 6, the access module correspondingly determines whether an entry corresponding to the first address exists in the access information table. If the entry corresponding to the first address does not exist in the access information table, it indicates that the data corresponding to the first address has not been accessed before. Therefore, the access module creates, in the access information table, a new entry corresponding to the first address. If the entry corresponding to the first address exists in the access information table, it indicates that the data corresponding to the first address has been accessed before, or the data corresponding to the first address is historically accessed data. Therefore, the access module does not need to create an entry, but updates the entry corresponding to the first address.

For example, each entry in the access information table includes but is not limited to information such as a valid bit, an address, first hotness information, a quantity of access times, and lifetime. The information is separately described as follows.

Valid bit: The valid bit indicates whether the entry in which the valid bit is located is valid.

Address: If the address has corresponding data, the entry in which the address is located is an entry corresponding to the data corresponding to the address. For example, the target data only includes one unit of data, and the first address corresponds to at most one entry in the access information table. The access module may determine, by retrieving whether the first address exists in the access information table, whether the entry corresponding to the first address exists in the access information table. If the first address does not exist in any entry, the access module determines that the entry corresponding to the first address does not exist in the access information table. If the first address exists in an entry, the access module determines that the entry having the first address is the entry corresponding to the first address.

First hotness information: The first hotness information indicates whether data corresponding to the address is hot data. For example, the first hotness information is a hot identifier. When a value of the hot identifier is a first value, the hot identifier indicates that the data corresponding to the address in the entry is hot data; or when a value of the hot identifier is a second value, the hot identifier indicates that the data corresponding to the address in the entry is cold data. The first value and the second value are different values. The first value is, for example, 1, and the second value is, for example, 0. The first value and the second value are not limited in this application.

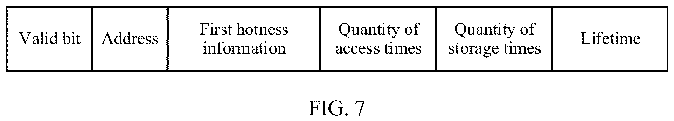

Quantity of access times: The quantity of access times includes only a quantity of fetching times (namely, a quantity of read times), or includes only a quantity of storage times (namely, a quantity of write times), or includes a quantity of fetching times and a quantity of storage times. For example, when the quantity of access times includes the quantity of fetching times and the quantity of storage times, for a structure of the entry in the access information table, refer to FIG. 7.

Lifetime: The lifetime is a difference between a current moment and a moment at which data corresponding to the address in the entry is accessed last time. In other words, the lifetime is duration for which data corresponding to the address in the entry is not accessed. Each time the data corresponding to the address in the entry is accessed, the lifetime is reset to zero and starts positive timing. The lifetime may be updated in real time.

It should be understood that creating the entry mentioned above means adding an entry to the access information table, and recording each piece of information in the entry. For example, the current quantity of access times is first determined, the first hotness information is determined based on each piece of information other than the first hotness information, and the first hotness information and each piece of information other than the first hotness information are recorded in the entry. Updating the entry corresponding to the first address mentioned above means updating information recorded in the entry, for example, updating the first hotness information and the quantity of access times in the entry. For example, the current quantity of access times is first determined, and updated first hotness information is determined based on the current quantity of access times. If an original quantity of access times is different from the current quantity of access times, the original quantity of access times in the quantity of access times recorded in the entry is replaced with the current quantity of access times. If original first hotness information is different from the updated first hotness information, the original first hotness information in the first hotness information recorded in the entry is replaced with the updated first hotness information. This completes updating the entry. When the target instruction is an access instruction, the current quantity of access times is greater than the original quantity of access times, and the current quantity of access times may be obtained by adding on the basis of the original quantity of access times. Alternatively, when the target instruction is not the access instruction, the current quantity of access times is equal to the original quantity of access times. In addition, for a process of determining the first hotness information, refer to descriptions in the following step 502. Details are not described herein.

It should be further understood that maintenance of the access information table is equivalent to collection of access information. In a related technology, access information is usually collected by using a bidirectional hash-linked list, so as to subsequently implement a data trace hash migrator (trace hash migrator, THMigrator) based on the collected access information. However, compared with that in the access information table provided in embodiments of this application, collection of the access information is implemented by using the bidirectional hash-linked list in the related technology, has difficulty, high overheads, and low practicability, is applicable only to a simulator environment, and cannot be applicable to a real hardware environment as that in embodiments of this application.

Case A2: The controller determines the historically accessed data as the target data, the target data corresponds to the first address, and the first address is within an address range of a first storage medium.

Refer to FIG. 4. The controller may determine, by using the access module, the historically accessed data as the target data. For example, it can be learned from the description corresponding to the foregoing Case B2 that, when the first address corresponding to the target data is in the address range of the first storage medium, if the target data is the historically accessed data, an entry corresponding to the target data exists in the access information table. Based on this, work backwards. The access module may use data corresponding to an address in each entry included in the access information table as the target data, and the address recorded in each entry is the first address corresponding to the target data.

In an example embodiment, refer to Branch 2 in FIG. 6. The access module queries the access information table in each clock cycle to obtain the target data, and therefore implements periodic determining of the target data. Because the target data is the data that needs to be managed, it is equivalent to periodically triggering management of the target data.

Step 502: Manage the target data by using a target storage medium, where the target storage medium is a storage medium, corresponding to the target data, in the first storage medium, the first part, and the second part.

Because the target data is the data that needs to be managed, after the target data is obtained, the target data should be managed by using the target storage medium. For example, when the first address corresponding to the target data is in different address ranges, the target storage medium and a manner of managing the target data by using the target storage medium are also correspondingly different. Refer to the following description.

In some implementations, for the foregoing Case B1, that is, when the first address corresponding to the target data is within the address range of the second part of the second storage medium, the target storage medium is the second part of the second storage medium.

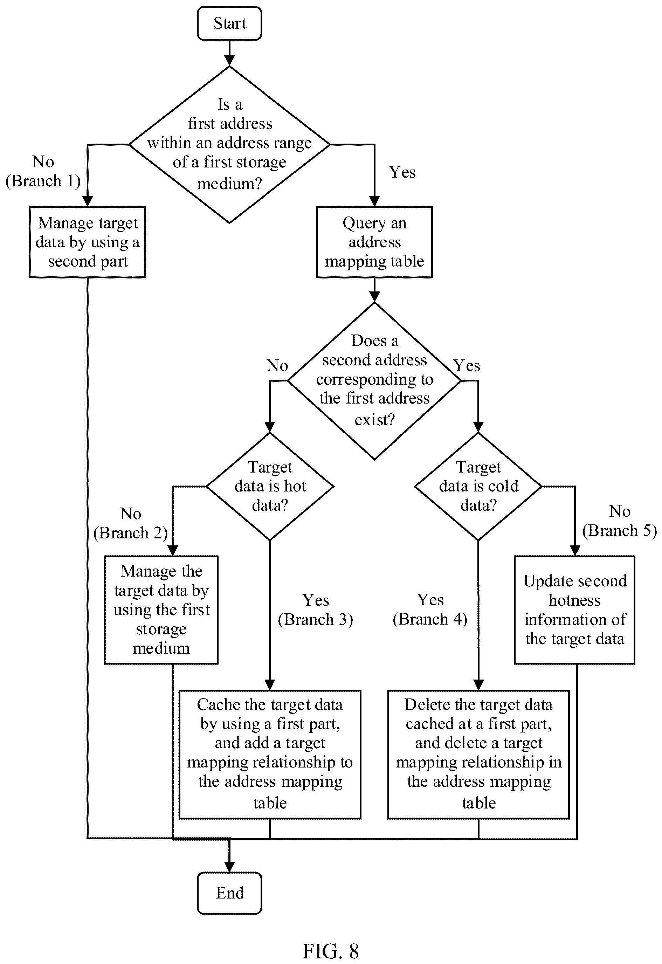

Correspondingly, refer to Branch 1 in FIG. 8. That the controller manages the target data by using the target storage medium includes that the controller manages the target data by using the second part. Because the first address in Case B1 is obtained according to the target instruction, when the target instruction is an access instruction, managing the target data by the controller is accessing, based on an indication of the access identifier carried in the target instruction, the target data at the first address included in the second part, for example, reading the target data stored at the first address, and sending the target data to the controller, and for another example, writing the target data into the first address. Alternatively, when the target instruction is not the access instruction, managing the target data by the controller may be managing the target data in a default management manner. The default management manner includes but is not limited to a manner of keeping storage of the target data by the second part, performing error correction on the target data, and the like. The default management manner may be set based on an actual requirement. This is not limited herein.

Refer to FIG. 4, in this implementation, a process in which the controller manages the target data may be implemented by using the mapping module, the migration module, and the control module that are included in the controller. The access module receives the first address sent by the address translation module, determines that the first address is within the address range of the second portion, and obtains a determining result. The access module sends the determining result to the mapping module, the mapping module sends the determining result to the migration module, and the migration module indicates, based on the determining result, the control module to manage the target data by using the second part. Correspondingly, the control module manages the target data by using the second part based on the indication, to complete the process of managing the target data.

In some other implementations, for the foregoing Case B2 and Case A2, that is, when the first address corresponding to the target data is within the address range of the first storage medium, the target storage medium is the first part of the second storage medium, or the target storage medium is the first part and the first storage medium.

Correspondingly, that the controller manages the target data by using the target storage medium includes that the controller obtains the first hotness information corresponding to the target data, where the first hotness information indicates whether the target data is hot data; and the controller manages the target data by using the target storage medium based on the first hotness information.

The first hotness information and that the first hotness information corresponding to the target data may be determined based on the information recorded in the entry corresponding to the target data are described above in step 501. Refer to FIG. 4. The controller may determine the first hotness information by using the access module, that is, obtain the first hotness information. For example, a manner of obtaining the first hotness information includes but is not limited to the following Case C1 and Case C2.

Corresponding to Case C1 of Case B2, obtaining, by the controller, the first hotness information corresponding to the target data includes determining a reference value based on a quantity of access times of the target data, reference duration, and a first threshold, where the reference duration is a difference between a receiving moment of the target instruction and a moment at which the target data is accessed last time, and the reference duration is less than the first threshold; and determining, when the reference value is greater than a second threshold, that the first hotness information indicates that the target data is hot data, or determining, when the reference value is less than or equal to a third threshold, that the first hotness information indicates that the target data is cold data, where the third threshold is less than or equal to the second threshold.

The controller first determines the current quantity of access times and the lifetime. The lifetime recorded in the entry corresponding to the target data in the access information table is a difference between a current moment (namely, the receiving moment of the target instruction) and the moment at which the target data is accessed last time, the lifetime is updated in real time, and therefore the lifetime may be used as the reference duration. The controller further obtains the first threshold. The first threshold may be understood as maximum lifetime. A value of the first threshold is not limited in embodiments of this application, and the value of the first threshold may be set based on an actual requirement.

For example, the quantity of access times includes a quantity of read times and a quantity of write times. Determining the reference value based on the quantity of access times of the target data, the reference duration, and the first threshold includes: determining, by the controller, a weighted sum value of the quantity of read times and the quantity of write times, determining a difference between the first threshold and the reference duration, determining a ratio of the reference duration to the difference, and then determining a product of the weighted sum value and the ratio as the reference value. Therefore, a process of determining the reference value may be expressed as the following formula:

$$H = (\alpha \times w_c + (1 - \alpha) \times r_c) \times \frac{t}{T - t}$$

In the formula, $H$ represents the reference value, $w_c$ represents the quantity of write times, $r_c$ represents the quantity of read times, $\alpha$ represents a weight corresponding to the quantity of write times, $(1 - \alpha)$ represents a weight corresponding to the quantity of read times, $T$ represents the first threshold, and $t$ represents the reference duration.

After determining the reference value, the controller determines the first hotness information based on a value range of the reference value. Refer to Branch 1 in FIG. 6. When the value range of the reference value is greater than the second threshold, it indicates that the reference value is large enough and the target data is hot enough. Therefore, it is determined that the first hotness information indicates that the target data is hot data. When the value range of the reference data is less than or equal to the third threshold, it indicates that the reference value is small enough and the target data is cold enough. Therefore, it is determined that the first hotness information indicates that the target data is cold data. It should be understood that values of both the second threshold and the third threshold may be determined based on an actual requirement. It should be further understood that, after the first hotness information is determined, the first hotness information needs to be recorded in the created entry, or needs to be recorded in the updated entry as updated first hotness information. For details, refer to the description in step 501. Details are not described herein again.

Corresponding to Case C2 of Case A2, obtaining, by the controller, the first hotness information corresponding to the target data includes determining, when duration for which the target data is not accessed reaches a fourth threshold, that the first hotness information indicates that the target data is cold data.

If the duration for which the target data is not accessed reaches the fourth threshold, it indicates that the target data is not accessed in a long period of time, and the target data is cold enough. Therefore, it may be determined that the first hotness information indicates that the target data is cold data. A value of the fourth threshold may be determined based on an actual requirement. This is not limited herein.

For example, refer to Branch 2 in FIG. 6. Each time the clock cycle arrives, the controller may determine whether the duration for which the target data is not accessed reaches the fourth threshold; and if the duration for which the target data is not accessed reaches the fourth threshold, determine that the first hotness information indicates that the target data is cold data; or if the duration for which the target data is not accessed does not reach the fourth threshold, consider that the target data is not the cold data in the current clock cycle, and repeatedly perform the determining process after a next clock cycle arrives. Certainly, the determined first hotness information also needs to be recorded in the created entry, or is recorded in the updated entry as updated first hotness information. Details are not described herein again.

For example, a manner in which the controller determines that the duration for which the target data is not accessed reaches the fourth threshold includes but is not limited to the following Case D1 and Case D2.

Case D1: A timer corresponding to the target data is obtained, where the timer is configured to start a countdown from the fourth threshold after the target data is accessed last time. Therefore, if the timer corresponding to the target data has returned to zero, it indicates that the duration for which the target data is not accessed reaches the fourth threshold. If the timer corresponding to the target data does not return to zero, it indicates that the duration for which the target data is not accessed does not reach the fourth threshold yet.

Case D2: The controller obtains the lifetime from the entry corresponding to the target data, where the lifetime is the duration for which the target data is not accessed. Therefore, the controller may compare the lifetime with the fourth threshold, to determine whether the duration for which the target data is not accessed reaches the fourth threshold.

It should be understood that the foregoing described Case C1 and Case C2 for obtaining the first hotness information are examples. In embodiments of this application, the first hotness information may alternatively be obtained in another possible manner. This is not limited herein. Regardless of how to obtain the first hotness information, the target data may be managed by using the target storage medium based on the obtained first hotness information. Before the management process is described, an address mapping table that needs to be used in the management process is first described for ease of understanding.

The address mapping table indicates a mapping relationship between a first address in the address range of the first storage medium and a second address in an address range of the first part. If the mapping relationship exists in the address mapping table, it indicates that the target data corresponding to the first address is cached at the second address. If the mapping relationship does not exist in the address mapping table, it indicates that the target data corresponding to the first address is not cached in the first part. Refer to FIG. 4. The controller may query and maintain the address mapping table by using the mapping module. For details, refer to the following description.

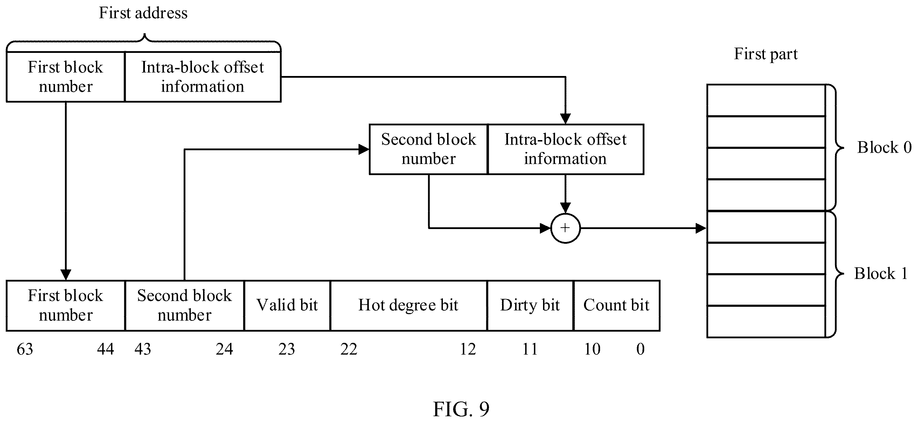

For example, FIG. 9 shows one address mapping table. The address mapping table uses a full associative mode. Each entry in the address mapping table occupies 64 bits, and each entry includes but is not limited to information such as a first block number (block number), a second block number, a valid (valid) bit, a hot degree (hot degree) bit, a dirty (dirty) bit, and a count (count) bit. The following separately describes the information.

The first block number indicates a block number in a first storage medium.

The second block number indicates a block number in a first part.

For the address mapping table shown in FIG. 9, a manner of representing a first address may be the first block number and intra-block offset information. Correspondingly, still refer to FIG. 9. That the controller queries the address mapping table according to the first address includes that the controller queries entries in the address mapping table based on the first block number included in the first address. Then, if an entry is hit, the second block number corresponding to the first block number in the entry is obtained. The second address corresponding to the first address may be determined based on the second block number, and the intra-block offset information included in the first address, and the second address is within the address range of the first part. In addition, blocks (for example, a block 0 and a block 1 shown in FIG. 9) in the first part included in the second storage medium may also be referred to as pages (pages).

The valid bit indicates whether the entry is valid.

The dirty bit indicates whether target data corresponding to the entry is dirty data. That the target data is the dirty data means that the target data is modified after the target data is cached in the first part, and that the target data is not the dirty data means that the target data is not modified after the target data is cached in the first part.

The count bit indicates locality of the target data corresponding to the entry in which the count bit is located, for example, temporal locality, where the temporal locality means a frequency of fetching the target data in short time. A manner of calculating the count bit is not limited in embodiments of this application.

The hot degree bit indicates a priority of the target data corresponding to the entry.

The count bit and the hot degree bit are used together to determine a replacement policy for each entry in the address mapping table. Alternatively, the count bit and the hot degree bit are used together to determine which entries correspond to data that is hot enough and need to be cached by using the first part (add the entries corresponding to the data to the address mapping table), and which entries correspond to data that is not hot enough and do not need to be cached by using the first part (delete, from the address mapping table, the entries corresponding to the data). This forms a replacement policy for each entry. For example, in embodiments of this application, the replacement policy is determined based on a least recently used (least recently used, LRU) algorithm with reference to the count bit and the hot degree bit. Therefore, a quasi-LRU algorithm is formed. For details, refer to the following description.

It should be understood that the address mapping table in the full associative mode is merely an example. In embodiments of this application, an address mapping table in another mode may be selected based on an actual requirement, for example, an address mapping table in a set-associative mode or an address mapping table in a direct-mapped mode. This is not limited herein.

Based on the foregoing described address mapping table, the process in which the controller manages the target data by using the target storage medium based on the first hotness information includes but is not limited to the following Case E1 to Case E4.

Case E1: Refer to Branch 2 in FIG. 8. That the controller manages the target data by using the target storage medium based on the first hotness information includes that the controller queries the address mapping table according to the first address corresponding to the target data, to obtain a query result; and manages, when the first hotness information indicates that the target data is cold data and the query result indicates that the first address does not correspond to the second address, the target data by using the target storage medium, where the target storage medium is the first storage medium.

Because the target data is cold data, it indicates that the target data does not need to be cached by using the first part. Because the query result indicates that the first address does not correspond to the second address, it indicates that the target data is not actually cached in the first part. Therefore, the first part does not need to be adjusted to cache the target data, and the entries in the address mapping table do not need to be replaced.

Case E1 may be implemented by using the access module, the mapping module, the migration module, and the control module shown in FIG. 4. The access module receives the first address sent by the address translation module, determines that the first address is in the address range of the first storage medium, obtains the determining result, and sends the first address and the determining result to the mapping module. The mapping module queries the address mapping table based on the determining result and the first address, to obtain the query result; and when the query result indicates that the first address does not correspond to the second address, the mapping module further obtains the first hotness information determined by the access module, and sends, when the first hotness information indicates that the target data is cold data, an indication to the migration module. The migration module further indicates the control module. The control module manages the target data by using the first storage medium based on the indication, to complete the process of managing the target data.

For example, when the controller determines the first hotness information (namely, the foregoing Case C1) according to the target instruction and the target instruction is the access instruction, that the controller manages the target data by using the target storage medium may include that the controller accesses the target data at the first address in the first storage medium based on the indication of the access identifier carried in the target instruction. For example, the target data stored at the first address is read, and is sent to the controller, or the target data is written into the first address. Therefore, it is equivalent to that the first part is bypassed, and the cold data in the first storage medium is directly accessed. When the controller determines the first hotness information according to the target instruction but the target instruction is not the access instruction, or the controller does not determine the first hotness information according to the target instruction (namely, the foregoing Case C2), managing, by the controller, the target data may be managing the target data at the first address in the first storage medium in a default management manner. The default management manner includes but is not limited to a manner of keeping storage of the target data, performing error correction on the target data, and the like. The default management manner may be set based on an actual requirement. This is not limited herein.

Case E2: Refer to Branch 3 in FIG. 8. That the controller manages the target data by using the target storage medium based on the first hotness information includes that the controller queries the address mapping table according to the first address corresponding to the target data, to obtain a query result; and caches, when the first hotness information indicates that the target data is hot data and the query result indicates that the first address does not correspond to the second address, the target data at the second address. The target storage medium includes the first storage medium and the first part. The method further includes: adding a target mapping relationship between the first address and the second address to the address mapping table, that is, adding, to the address mapping table, the entry corresponding to the target data.

Because the target data is hot data, it indicates that the target data needs to be cached by using the first part. Because the query result indicates that the first address does not correspond to the second address, it indicates that the target data is not cached in the first part. Therefore, it indicates that the hot target data needs to be cached by using the first part. In this case, the controller reads the target data from the first storage medium, and caches the target data at the second address, so that the first part caches the target data. This helps implement quick access of the target data subsequently by using the first part. In addition, the controller further needs to add, to the address mapping table, the entry corresponding to the target data, to indicate that the target data is cached in the first part.

Case E2 may be implemented by using the access module, the mapping module, the migration module, and the control module shown in FIG. 4. The access module receives the first address sent by the address translation module, determines that the first address is in the address range of the first storage medium, obtains the determining result, and sends the first address and the determining result to the mapping module. The mapping module queries the address mapping table based on the determining result and the first address, to obtain the query result; when the query result indicates that the first address does not correspond to the second address, the mapping module further obtains the first hotness information determined by the access module; and when the first hotness information indicates that the target data is hot data, in one aspect, the mapping module adds, in the address mapping table, the entry corresponding to the target data, and in another aspect, sends an indication to the migration module. The migration module further indicates the control module. The control module obtains the target data at the first address in the first storage medium based on the indication, and caches the target data at the second address in the first part.

In addition, a general LRU algorithm may be used in a process in which the controller adds, to the address mapping table, the target mapping relationship between the first address and the second address. In the LRU algorithm, if the target data is hot data (that is, the first hotness information corresponding to the target data in the access information table is greater than the second threshold), the target mapping relationship corresponding to the target data is added to the address mapping table. For example, an original mapping relationship in the address mapping table is directly replaced with the target mapping relationship.

However, if the hot data is burst hot data occasional in a period of time, this direct replacement manner causes the address mapping table to be filled with a mapping relationship corresponding to the burst hot data. For normal hot data whose average access frequency is high but whose access frequency in the period of time is lower than that of the burst hot data, the address mapping table cannot record a mapping relationship corresponding to the normal hot data. This may reduce a cache hit rate. Further, if there is a large amount of burst hot data in the time period, entries in the address mapping table are also frequently replaced. This not only causes a large amount of time and energy consumption overheads, but also may reduce a cache hit rate. It can be learned that, the LRU algorithm has a limit, and may cause a low cache hit rate, and further cause deterioration of access performance.

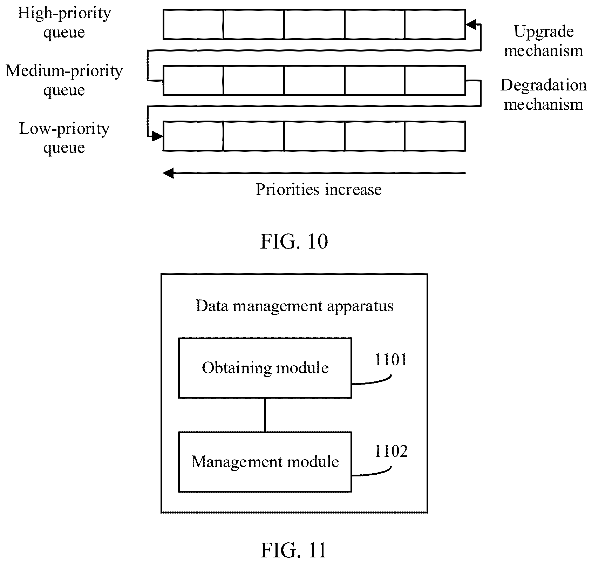

Therefore, in embodiments of this application, the LRU algorithm is improved, and a quasi-LRU algorithm is formed with reference to the count bit and the hot degree bit that are in the address mapping table and the buffer included in the controller. The buffer includes a plurality of queues, different queues have different priorities, and each queue is used to store a specific mapping relationship. Priorities of different locations in a same queue may be different or may be the same. For example, FIG. 10 shows an example of a buffer. The buffer includes a high-priority queue, a medium-priority queue, and a low-priority queue, and priorities of different locations in a same queue are different.

Based on this, in an example embodiment, that the controller adds the target mapping relationship between the first address and the second address to the address mapping table includes but is not limited to the following Case F1 and Case F2.

Case F1: Adding the target mapping relationship between the first address and the second address to the address mapping table includes adding, by the controller, the target mapping relationship to a queue with a lowest priority in a plurality of queues; and updating a location of the target mapping relationship in the plurality of queues based on an update status of second hotness information until the target mapping relationship is added to a queue with a highest priority in the plurality of queues, and then adding the target mapping relationship to the address mapping table.

The target mapping relationship corresponds to the second hotness information, and the second hotness information indicates a hot level of the target data. The second hotness information is the count bit and the hot degree bit in the address mapping table shown in FIG. 9. It can be learned from the foregoing description that the count bit indicates the temporal locality of the target data corresponding to the entry in which the count bit is located, and the hot degree bit indicates the priority of the target data corresponding to the entry, where the priority may be a priority of a queue in which the target data is located.

In Case F1, although it is determined that the target data is hot data, the target mapping relationship corresponding to the target data is not directly added to the address mapping table. Therefore, the target mapping relationship is first added to the queue with the lowest priority in the plurality of queues. If the target data continues to be frequently accessed subsequently, and the temporal locality indicated by the count bit increases, the target mapping relationship may be transferred to a location with a higher priority in a same queue. If the target mapping relationship is already in a location with the highest priority in the queue, the target mapping relationship may be transferred to a location in a queue with a higher priority, and the priority indicated by the hot degree bit also increases. The transfer is repeated similarly. If the target mapping relationship can be subsequently transferred to the queue with the highest priority in the plurality of queues, it indicates that the target data corresponding to the target mapping relationship is hot enough. Therefore, the target mapping relationship hot enough may be added to the address mapping table.

In this manner, the target mapping relationship is not added to the address mapping table directly, but the target mapping relationship is added to the address mapping table after being buffered in a buffer. It is equivalent to an upgrade mechanism (as shown in FIG. 10). This can avoid not only a case in which the address mapping table is filled with only burst hot data but cannot cache a mapping relationship corresponding to normal hot data, but also a case in which an entry in the address mapping table is frequently replaced, increase a cache hit rate, and reduce overheads such as time and energy consumption.

Case F2: Adding the target mapping relationship between the first address and the second address to the address mapping table includes obtaining, by the controller, a reference mapping relationship from a queue with a lowest priority in a plurality of queues, and replacing the reference mapping relationship in the address mapping table with the target mapping relationship.

The reference mapping relationship is transferred from a queue with a non-lowest priority in the plurality of queues to the queue with the lowest priority in the plurality of queues. In other words, priorities of the reference mapping relationships are sequentially decreased. For example, reference data corresponding to the reference mapping relationship was once hot data. Therefore, the reference mapping relationship is added to the address mapping table, and the reference mapping relationship is in the queue with the non-lowest priority in the plurality of queues (for example, the queue with the highest priority) when the reference mapping relationship is added to the address mapping table. However, because the reference data is not continuously frequently accessed subsequently, and the temporal locality indicated by the count bit continuously decreases, the target mapping relationship may be transferred to a location with a lower priority in a same queue. Then, if the target mapping relationship is already at a location with the lowest priority in the queue, the target mapping relationship may be transferred to a location in a queue with a lower priority, and the priority indicated by the hot degree bit also decreases. The transfer is repeated similarly. The reference mapping relationship is transferred to the queue with the lowest priority, and is replaced, in the address mapping table, by the target mapping relationship.

For example, when priorities of locations in the queue with the lowest priority are the same, the reference mapping relationship may be a mapping relationship at any location in the queue with the lowest priority. When the priorities of the locations in the queue with the lowest priority are different, the reference mapping relationship may be a mapping relationship at a location with a lowest priority in the queue with the lowest priority.

In this manner, the reference mapping relationship is not replaced directly, but the reference mapping relationship is replaced by the target mapping relationship after being buffered in a buffer. It is equivalent to a degradation mechanism (as shown in FIG. 10). This can avoid frequent replacement of an entry in the address mapping table, increase a cache hit rate, and reduce overheads such as time and energy consumption.

It can be learned from the foregoing description that the entry corresponding to the target data may be added to the address mapping table by using the mapping module shown in FIG. 4. For example, for the foregoing Case F1 and Case F2, the mapping module may send an instruction to the migration module, and the migration module sends the instruction to the control module, so that the control module controls the buffer. Therefore, the target mapping relationship is added to the address mapping table by using the buffer, and the entry in the address mapping table is replaced.

For example, when the controller determines the first hotness information (namely, the foregoing Case C1) according to the target instruction and the target instruction is the access instruction, managing, by the controller, the target data may further include accessing the target data based on the indication of the access identifier carried in the target instruction, for example, accessing the target data stored at the first address or the second address.

Case E3: Refer to Branch 4 in FIG. 8. That the controller manages the target data by using the target storage medium based on the first hotness information includes that the controller queries the address mapping table according to the first address corresponding to the target data, to obtain a query result; and deletes, when the first hotness information indicates that the target data is cold data and the query result indicates that the first address corresponds to the second address, the target data at the second address. The method further includes that the controller deletes, from the address mapping table, the target mapping relationship between the first address and the second address, that is, deletes, in the address mapping table, the entry corresponding to the target data.

Because the target data is cold data, it indicates that the target data does not need to be cached by using the first part. Because the query result indicates that the first address corresponds to the second address, it indicates that the target data has been cached in the first part. Therefore, it indicates that the cold target data no longer needs to be cached by using the first part, and the controller needs to delete the target data cached at the second address, so as to reserve more capacity in the first part for caching other hot data. In addition, the controller further needs to delete, from the address mapping table, the entry corresponding to the target data, so as to indicate the first part not to cache the target data.

Case E3 may be implemented by using the access module, the mapping module, the migration module, and the control module shown in FIG. 4. The access module receives the first address sent by the address translation module, determines that the first address is in the address range of the first storage medium, obtains the determining result, and sends the first address and the determining result to the mapping module. The mapping module queries the address mapping table based on the determining result and the first address, to obtain the query result; when the query result indicates that the first address corresponds to the second address, the mapping module further obtains the first hotness information determined by the access module; and when the first hotness information indicates that the target data is cold data, in one aspect, the mapping module deletes, from the address mapping table, the entry corresponding to the target data, and in another aspect, sends an indication to the migration module. The migration module further indicates the control module. The control module deletes, based on the indication, the target data cached at the second address of the first part.

In an example embodiment, the controller does not need to determine whether the target data cached in the first part is dirty data, and directly deletes the target data cached in the first part. For example, when the second storage medium is a read-only storage medium, the target data cached in the first part is not modified and does not become the dirty data. Therefore, it does not need to determine whether the target data is the dirty data. Alternatively, if the target data cached in the first part may be modified, the controller may first determine whether the target data is the dirty data, for example, query, in the address mapping table by using the mapping module, the entry corresponding to the target data, and determines, based on a dirty bit in the entry, whether the target data is the dirty data; and then deletes the target data based on a determining result. For details, refer to Case G1 and Case G2.

Case G1: When the first hotness information indicates that the target data is cold data, the query result indicates that the first address corresponds to the second address, and the query result further indicates that the target data is the dirty data, the target data cached at the second address is written into the first address, and then the target data cached at the second address is deleted.

Because the target data is the dirty data, it indicates that the target data is modified after the first part caches the target data. In other words, the target data stored at the first address in the first storage medium is inconsistent with the target data cached at the second address in the first part. Therefore, the target data cached at the second address needs to be first written into the first address, and then the target data cached at the second address is deleted, to ensure consistency of data in the first storage medium and the first part. Both write and delete processes may be completed by the control module shown in FIG. 4.

Case G2: When the first hotness information indicates that the target data is cold data, the query result indicates that the first address corresponds to the second address, and the query result further indicates that the target data is clean data, the target data cached at the second address is deleted.

Because the target data is the clean data, it indicates that the target data is not modified after the first part caches the target data. In this case, the target data stored at the first address in the first storage medium and the target data cached at the second address in the first part are originally consistent data. Therefore, the target data cached at the second address is directly deleted, and the target data does not need to be written into the first address in the first storage medium.

For example, when the controller determines the first hotness information (namely, the foregoing Case C1) according to the target instruction and the target instruction is the access instruction, managing, by the controller, the target data may further include accessing the target data based on the indication of the access identifier carried in the target instruction, for example, accessing, before deleting the target data from the first part, the target data stored at the second address of the first part, for another example, accessing, after deleting the target data from the first part, the target data stored at the first address of the first storage medium.

Case E4: Refer to Branch 5 in FIG. 8. That the controller manages the target data by using the target storage medium based on the first hotness information includes querying the address mapping table according to the first address corresponding to the target data, to obtain a query result; and continuing, when the first hotness information indicates that the target data is hot data and the query result indicates that the first address corresponds to the second address, to cache the target data at the second address. The method further includes: updating second hotness information corresponding to a target mapping relationship between the first address and the second address, where the second hotness information indicates a hot level of the target mapping relationship.

Because the target data is hot data, it indicates that the target data needs to be cached by using the first part. Because the query result indicates that the first address corresponds to the second address, it indicates that the target data has been cached in the first part. Therefore, there is no need to adjust a cache status of the target data, so that the target data is still cached at the second address. There is no need to replace each entry in the address mapping table, and only the second hotness information corresponding to the target mapping relationship needs to be updated. That is, the count bit and the hot degree bit are updated in the address mapping table, to indicate that a hot level of the target mapping relationship increases.

Case E4 may be implemented by using the access module and the mapping module shown in FIG. 4. The access module receives the first address sent by the address translation module, determines that the first address is in the address range of the first storage medium, obtains the determining result, and sends the first address and the determining result to the mapping module. The mapping module queries the address mapping table based on the determining result and the first address, to obtain the query result; when the query result indicates that the first address corresponds to the second address, the mapping module further obtains the first hotness information determined by the access module; and when the first hotness information indicates that the target data is hot data, the mapping module updates, in the address mapping table, the second hotness information corresponding to the target mapping relationship. Corresponding to updating the second hotness information, a location of the target mapping relationship in each priority queue included in the buffer may be adjusted based on updated second hotness information, so that the target mapping relationship is less likely to be replaced, from the address mapping table, by another mapping relationship.

For example, when the controller determines the first hotness information (namely, the foregoing Case C1) according to the target instruction and the target instruction is the access instruction, managing, by the controller, the target data may further include accessing the target data based on an indication of the access identifier carried in the target instruction, for example, accessing the target data stored at the second address.

It can be learned from the foregoing Case E1 to Case E4 that, in embodiments of this application, the controller can dynamically switch architectures of the first storage medium and the first part only, and maintain consistency of the target data between the first storage medium and the first part. In a process of switching from the parallel architecture to the hierarchical architecture, only entries need to be gradually created in the address mapping table. In a process of switching from the hierarchical architecture to the parallel architecture, only entries need to be deleted from the address mapping table. When the target data is the dirty data, overheads of writing the target data back into the first storage medium are increased. In addition, in a normal use process of the data management system, for example, in a process in which only data access is required, overheads of querying the address mapping table to determine whether a cache is hit may be generated. In addition, there is no additional overhead for maintaining consistency. Compared with a related technology with a large quantity of overheads (including but not limited to overheads of flush (flush) of an on-chip cache, overheads of a translation lookaside buffer (translation lookaside buffer, TLB), and overheads of (shootdown)) generated when an operating system is used to maintain consistency, embodiments of this application require low overheads.

In conclusion, the data management system provided in embodiments of this application can enable coexistence of the parallel architecture and the hierarchical architecture, meet, with high applicability, both an access requirement of an application with weak locality and an access requirement of an application with strong locality.

For the application with the weak locality, if the hierarchical architecture is independently used, data stored in a slow storage needs to be cached in a fast storage, resulting in unnecessary data movement, a large access delay, and high power consumption. In addition, when the hierarchical architecture is independently used, only the first storage medium is used as a main memory, and a capacity of the main memory is small. Therefore, in embodiments of this application, the parallel architecture can be used for the application with the weak locality. The first storage medium and the second part may be separately used as the main memory. It is equivalent to increasing a capacity of the main memory. In addition, data is stored by using the first storage medium or the first part. This can avoid unnecessary data movement, reduce an access delay, and reduce power consumption.

For the application with strong locality, if the parallel architecture is used independently, an access operation for a slow storage may be generated, and data in a fast storage may need to be written back into the slow storage (because after the data is migrated from the slow storage to the fast storage, the slow storage does not store the data, and therefore the data needs to be written back). Therefore, not only an access delay is increased, but also power consumption is increased. Therefore, in embodiments of this application, the hierarchical architecture can be used for the application with strong locality, to transfer hot data from the first storage medium with a low access speed to the first part with a high access speed, and data cached in the first part may not be written back to the first storage medium. Therefore, not only the access delay can be reduced, but also overheads for write-back are reduced, power consumption is reduced, wear of the first storage medium is reduced, and a service life of the first storage medium is prolonged.

The data management method provided in embodiments of this application is described above. In correspondence to the foregoing method, embodiments of this application further provide a data management apparatus. The data management apparatus is used in a controller included in a data management system, the data management system further includes a first storage medium and a second storage medium, an access speed of the first storage medium is lower than an access speed of the second storage medium, the second storage medium includes a first part and a second part, the first part is a cache for the first storage medium, and the first storage medium and the second part are not caches. The data management apparatus is configured to perform, by using the modules shown in FIG. 11, the data management method shown in FIG. 5. As shown in FIG. 11, the data management apparatus provided in embodiments of this application includes the following modules:

an obtaining module 1101, configured to obtain target data that needs to be managed; and
a management module 1102, configured to manage the target data by using a target storage medium, where the target storage medium is a storage medium, corresponding to the target data, in the first storage medium, the first part, and the second part.

In an example embodiment, the management module 1102 is configured to: obtain first hotness information corresponding to the target data, where the first hotness information indicates whether the target data is hot data; and manage the target data based on the first hotness information by using the target storage medium, where the target storage medium is the first part, or the target medium is the first storage medium and the first part.

In an example embodiment, the management module 1102 is configured to: receive a target instruction, obtain a first address according to the target instruction, and determine data corresponding to the first address as the target data; determine, when the first address is within an address range of the first storage medium, a reference value based on a quantity of access times of the target data, reference duration, and a first threshold, where the reference duration is a difference between a receiving moment of the target instruction and a moment at which the target data is accessed last time, and the reference duration is less than the first threshold; and determine, when the reference value is greater than a second threshold, that the first hotness information indicates that the target data is hot data, or determine, when the reference value is less than or equal to a third threshold, that the first hotness information indicates that the target data is cold data, where the third threshold is less than or equal to the second threshold.

For example, the management module 1102 is configured to: determine historically accessed data as the target data, where the target data corresponds to a first address, and the first address is within an address range of the first storage medium; and determine, when duration for which the target data is not accessed reaches a fourth threshold, that the first hotness information indicates that the target data is cold data.

In an example embodiment, the management module 1102 is configured to: query an address mapping table according to the first address corresponding to the target data, to obtain a query result; and delete, when the first hotness information indicates that the target data is cold data and the query result indicates that the first address corresponds to a second address in an address range of the first part, the target data cached at the second address; and the management module 1102 is further configured to delete, from the address mapping table, a target mapping relationship between the first address and the second address.

In an example embodiment, the management module 1102 is configured to: when the first hotness information indicates that the target data is cold data, the query result indicates that the first address corresponds to the second address in the address range of the first part, and the query result further indicates that the target data is dirty data, write the target data cached at the second address into the first address, and then delete the target data cached at the second address.

For example, the management module 1102 is configured to: delete, when the first hotness information indicates that the target data is cold data, the query result indicates that the first address corresponds to the second address in the address range of the first part, and the query result further indicates that the target data is clean data, the target data cached at the second address.

In an example embodiment, the management module 1102 is configured to: query an address mapping table according to the first address corresponding to the target data, to obtain a query result; and cache, when the first hotness information indicates that the target data is hot data and the query result indicates that the first address does not correspond to a second address in an address range of the first part, the target data at the second address; and the management module 1102 is further configured to add a target mapping relationship between the first address and the second address to the address mapping table.

In an example embodiment, the management module 1102 is configured to: add the target mapping relationship to a queue with a lowest priority in a plurality of queues, where the target mapping relationship corresponds to second hotness information, and the second hotness information indicates a hot level of the target data; and update a location of the target mapping relationship in the plurality of queues based on an update status of the second hotness information until the target mapping relationship is added to a queue with a highest priority in the plurality of queues, and then add the target mapping relationship to the address mapping table.

In an example embodiment, the management module 1102 is configured to: obtain a reference mapping relationship from a queue with a lowest priority in a plurality of queues, and replace the reference mapping relationship in the address mapping table with the target mapping relationship, where the reference mapping relationship is transferred from a queue with a non-lowest priority in the plurality of queues to the queue with the lowest priority in the plurality of queues.

For example, the management module 1102 is configured to: query an address mapping table according to the first address corresponding to the target data, to obtain a query result; and continue, when the first hotness information indicates that the target data is hot data and the query result indicates that the first address corresponds to a second address in an address range of the first part, to cache the target data at the second address; and the management module 1102 is further configured to update second hotness information corresponding to a target mapping relationship between the first address and the second address, where the second hotness information indicates a hot level of the target mapping relationship.

It should be understood that, when the apparatus provided in FIG. 11 implements functions of the apparatus, beneficial effect of the apparatus is the same as the beneficial effect of the data management method shown in FIG. 5. When the apparatus provided in FIG. 11 implements the functions of the apparatus, division into the foregoing functional modules is merely used as an example for description. In an actual application, the foregoing functions may be allocated and implemented by different functional modules based on requirements, that is, an internal structure of a device is divided into different functional modules, to implement all or some of the foregoing described functions. In addition, the apparatus provided in the foregoing embodiment and the method embodiment pertain to a same concept. For a specific implementation process of the apparatus, refer to the method embodiment. Details are not described herein again.

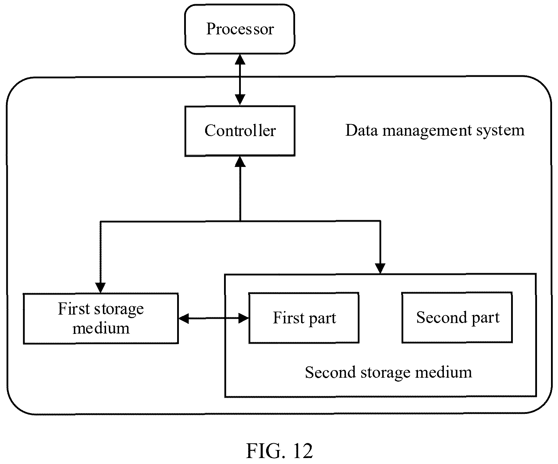

In an example embodiment, an embodiment of this application further provides a data management device. As shown in FIG. 12, the data management device includes a processor and a data management system. The processor is connected to a controller included in the data management system. For example, the processor is connected to the controller through a bus. The data management system may be any data management system described above, for example, the data management system shown in FIG. 3 or FIG. 4.

For example, the processor is, for example, a general-purpose central processing unit (central processing unit, CPU), a digital signal processor (digital signal processor, DSP), a network processor (network processor, NP), a GPU, a neural-network processing unit (neural-network processing unit, NPU), a data processing unit (Data Processing Unit, DPU), a microprocessor, or one or more integrated circuits, application-specific integrated circuits (application-specific integrated circuits, ASICs), programmable logic devices (programmable logic devices, PLDs), other general-purpose processors or other programmable logic devices, discrete gates, transistor logic devices, or discrete hardware components that are configured to implement the solutions of this application, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The general-purpose processor may be a microprocessor, any conventional processor, or the like. It should be noted that the processor may be a processor that supports an advanced reduced instruction set computer machines (advanced RISC machines, ARM) architecture. The processor may implement or execute various logical blocks, modules, and circuits described with reference to content disclosed in this application. Alternatively, the processor may be a combination implementing a computing function, for example, a combination including one or more microprocessors, or a combination of the DSP and the microprocessor.

For example, an embodiment of this application further provides a controller. The controller is configured to perform the data management method corresponding to FIG. 5. The controller may be a chip, or may be in another form other than the chip. This is not limited herein.

Terms such as "first" and "second" in this application are used to distinguish between same or similar items with basically same roles and functions. It should be understood that there is no logical or timing dependency between "first", "second", and "n$^{th}$", and neither a quantity nor an execution sequence is limited. It should also be understood that although the following descriptions use terms such as "first" and "second" to describe various elements, these elements should not be limited by the terms. These terms are simply used to distinguish one element from another.

It should also be understood that sequence numbers of processes do not mean execution sequences in embodiments of this application. The execution sequences of the processes should be determined based on functions and internal logic of the processes, and should not be construed as any limitation on the implementation processes of embodiments of this application.

The term "at least one" in this application means one or more, and the term "a plurality of" in this application means two or more. For example, a plurality of queues mean two or more queues. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the terms "if' and "assuming that" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are embodiments of this application, but are not intended to limit this application. Any modification, equivalent replacement, improvement, or the like made without departing from the principle of this application should fall within the protection scope of this application.

**Claims**

1.    A data management system, wherein the data management system comprises a controller, a first storage medium, and a second storage medium, an access speed of the first storage medium is lower than an access speed of the second storage medium, the second storage medium comprises a first part and a second part, the first part is a cache for the first storage medium, and the first storage medium and the second part are not caches;

the controller is configured to obtain target data that needs to be managed; and
the controller is further configured to manage the target data by using a target storage medium, wherein the target storage medium is a storage medium, corresponding to the target data, in the first storage medium, the first part, and the second part.

2. The data management system according to claim 1, wherein the controller is configured to: obtain first hotness information corresponding to the target data, wherein the first hotness information indicates whether the target data is hot data; and

manage the target data based on the first hotness information by using the target storage medium, wherein
the target storage medium is the first part, or the target medium is the first storage medium and the first part.

3. The data management system according to claim 2, wherein the controller is configured to: receive a target instruction, obtain a first address according to the target instruction, and determine data corresponding to the first address as the target data;

determine, when the first address is within an address range of the first storage medium, a reference value based on a quantity of access times of the target data, reference duration, and a first threshold, wherein the reference duration is a difference between a receiving moment of the target instruction and a moment at which the target data is accessed last time, and the reference duration is less than the first threshold; and determine, when the reference value is greater than a second threshold, that the first hotness information indicates that the target data is hot data, or determine, when the reference value is less than or equal to a third threshold, that the first hotness information indicates that the target data is cold data, wherein the third threshold is less than or equal to the second threshold.

4. The data management system according to claim 2, wherein the controller is configured to: determine historically accessed data as the target data, wherein the target data corresponds to a first address, and the first address is within an address range of the first storage medium; and
determine, when duration for which the target data is not accessed reaches a fourth threshold, that the first hotness information indicates that the target data is cold data.

5. The data management system according to any one of claims 2 to 4, wherein the controller is configured to: query an address mapping table based on the first address corresponding to the target data, to obtain a query result; and

delete, when the first hotness information indicates that the target data is cold data and the query result indicates that the first address corresponds to a second address in an address range of the first part, the target data cached at the second address; and
the controller is further configured to delete, from the address mapping table, a target mapping relationship between the first address and the second address.

6. The data management system according to claim 5, wherein the controller is configured to: when the first hotness information indicates that the target data is cold data, the query result indicates that the first address corresponds to the second address in the address range of the first part, and the query result further indicates that the target data is dirty data, write the target data cached at the second address into the first address, and then delete the target data cached at the second address.

7. The data management system according to claim 5, wherein the controller is configured to: delete, when the first hotness information indicates that the target data is cold data, the query result indicates that the first address corresponds to the second address in the address range of the first part, and the query result further indicates that the target data is clean data, the target data cached at the second address.

8. The data management system according to claim 2 or 3, wherein the controller is configured to: query an address mapping table according to the first address corresponding to the target data, to obtain a query result; and

cache, when the first hotness information indicates that the target data is hot data and the query result indicates that the first address does not correspond to a second address in an address range of the first part, the target data at the second address; and
the controller is further configured to add a target mapping relationship between the first address and the second address to the address mapping table.

9. The data management system according to claim 8, wherein the controller is configured to: add the target mapping relationship to a queue with a lowest priority in a plurality of queues, wherein the target mapping relationship corresponds to second hotness information, and the second hotness information indicates a hot level of the target data; and update a location of the target mapping relationship in the plurality of queues based on an update status of the second hotness information until the target mapping relationship is added to a queue with a highest priority in the plurality of queues, and then add the target mapping relationship to the address mapping table.

10. The data management system according to claim 8, wherein the controller is configured to: obtain a reference mapping relationship from a queue with a lowest priority in a plurality of queues, and replace the reference mapping relationship in the address mapping table with the target mapping relationship, wherein the reference mapping relationship is transferred from a queue with a non-lowest priority in the plurality of queues to the queue with the lowest priority in the plurality of queues.

11. The data management system according to claim 2 or 3, wherein the controller is configured to: query an address mapping table according to the first address corresponding to the target data, to obtain a query result; and

continue, when the first hotness information indicates that the target data is hot data and the query result indicates that the first address corresponds to a second address in an address range of the first part, to cache the target data at the second address; and the controller is further configured to update second hotness information corresponding to a target mapping relationship between the first address and the second address, wherein the second hotness information indicates a hot level of the target mapping relationship.

12. A data management method, wherein the data management method is applied to a controller comprised in a data management system, the data management system further comprises a first storage medium and a second storage medium, an access speed of the first storage medium is lower than an access speed of the second storage medium, the second storage medium comprises a first part and a second part, the first part is a cache for the first storage medium, the first storage medium and the second part are not caches, and the data management method comprises:

obtaining target data that needs to be managed; and managing the target data by using a target storage medium, wherein the target storage medium is a storage medium, corresponding to the target data, in the first storage medium, the first part, and the second part.

13. The data management method according to claim 12, wherein managing the target data by using the target storage medium comprises:

obtaining first hotness information corresponding to the target data, wherein the first hotness information indicates whether the target data is hot data; and managing the target data based on the first hotness information by using the target storage medium, wherein the target storage medium is the first part, or the target medium is the first storage medium and the first part.

14. The data management method according to claim 13, wherein obtaining the first hotness information corresponding to the target data comprises:

receiving a target instruction, obtaining a first address according to the target instruction, and determining data corresponding to the first address as the target data; determining, when the first address is within an address range of the first storage medium, a reference value based on a quantity of access times of the target data, reference duration, and a first threshold, wherein the reference duration is a difference between a receiving moment of the target instruction and a moment at which the target data is accessed last time, and the reference duration is less than the first threshold; and determining, when the reference value is greater than a second threshold, that the first hotness information indicates that the target data is hot data, or determining, when the reference value is less than or equal to a third threshold, that the first hotness information indicates that the target data is cold data, wherein the third threshold is less than or equal to the second threshold.

15. The data management method according to claim 13, wherein obtaining the first hotness information corresponding to the target data comprises:

determining historically accessed data as the target data, wherein the target data corresponds to a first address, and the first address is within an address range of the first storage medium; and

determining, when duration for which the target data is not accessed reaches a fourth threshold, that the first hotness information indicates that the target data is cold data.

16. The data management method according to any one of claims 13 to 15, wherein managing the target data based on the first hotness information by using the target storage medium comprises:

querying an address mapping table according to the first address corresponding to the target data, to obtain a query result; and deleting, when the first hotness information indicates that the target data is cold data and the query result indicates that the first address corresponds to a second address in an address range of the first part, the target data cached at the second address; and the data management method further comprises:
deleting, from the address mapping table, a target mapping relationship between the first address and the second address.

17. The data management method according to claim 16, wherein deleting, when the first hotness information indicates that the target data is cold data and the query result indicates that the first address corresponds to the second address in the address range of the first part, the target data cached at the second address comprises:
when the first hotness information indicates that the target data is cold data, the query result indicates that the first address corresponds to the second address in the address range of the first part, and the query result further indicates that the target data is dirty data, writing the target data cached at the second address into the first address, and then deleting the target data cached at the second address.

18. The data management method according to claim 16, wherein deleting, when the first hotness information indicates that the target data is cold data and the query result indicates that the first address corresponds to the second address in the address range of the first part, the target data cached at the second address comprises:
deleting, when the first hotness information indicates that the target data is cold data, the query result indicates that the first address corresponds to the second address in the address range of the first part, and the query result further indicates that the target data is clean data, the target data cached at the second address.

19. The data management method according to claim 13 or 14, wherein managing the target data based on the first hotness information by using the target storage medium comprises:

querying an address mapping table according to the first address corresponding to the target data, to obtain a query result; and caching, when the first hotness information indicates that the target data is hot data and the query result indicates that the first address does not correspond to a second address in an address range of the first part, the target data at the second address; and the data management method further comprises:
adding a target mapping relationship between the first address and the second address to the address mapping table.

20. The data management method according to claim 19, wherein adding the target mapping relationship between the first address and the second address to the address mapping table comprises:

adding the target mapping relationship to a queue with a lowest priority in a plurality of queues, wherein the target mapping relationship corresponds to second hotness information, and the second hotness information indicates a hot level of the target data; and updating a location of the target mapping relationship in the plurality of queues based on an update status of the second hotness information until the target mapping relationship is added to a queue with a highest priority in the plurality of queues, and then adding the target mapping relationship to the address mapping table.

21. The data management method according to claim 19, wherein adding the target mapping relationship between the first address and the second address to the address mapping table comprises:
obtaining a reference mapping relationship from a queue with a lowest priority in a plurality of queues, and replacing the reference mapping relationship in the address mapping table with the target mapping relationship, wherein the reference mapping relationship is transferred from a queue with a non-lowest priority in the plurality of queues to the queue with the lowest priority in the plurality of queues.

22. The data management method according to claim 13 or 14, wherein managing the target data based on the first hotness information by using the target storage medium comprises:

querying an address mapping table according to the first address corresponding to the target data, to obtain a query result; and

continuing, when the first hotness information indicates that the target data is hot data and the query result indicates that the first address corresponds to a second address in an address range of the first part, to cache the target data at the second address; and

the data management method further comprises: updating second hotness information corresponding to a target mapping relationship between the first address and the second address, wherein the second hotness information indicates a hot level of the target mapping relationship.

23. A data management apparatus, wherein the data management apparatus is used in a controller comprised in a data management system, the data management system further comprises a first storage medium and a second storage medium, an access speed of the first storage medium is lower than an access speed of the second storage medium, the second storage medium comprises a first part and a second part, the first part is a cache for the first storage medium, the first storage medium and the second part are not caches, and the data management apparatus comprises:

an obtaining module, configured to obtain target data that needs to be managed; and

a management module, configured to manage the target data by using a target storage medium, wherein the target storage medium is a storage medium, corresponding to the target data, in the first storage medium, the first part, and the second part.

24. The data management apparatus according to claim 23, wherein the management module is configured to: obtain first hotness information corresponding to the target data, wherein the first hotness information indicates whether the target data is hot data; and manage the target data based on the first hotness information by using the target storage medium, wherein the target storage medium is the first part, or the target medium is the first storage medium and the first part.

25. The data management apparatus according to claim 24, wherein the management module is configured to: receive a target instruction, obtain a first address according to the target instruction, and determine data corresponding to the first address as the target data; determine, when the first address is within an address range of the first storage medium, a reference value based on a quantity of access times of the target data, reference duration, and a first threshold, wherein the reference duration is a difference between a receiving moment of the target instruction and a moment at which the target data is accessed last time, and the reference duration is less than the first threshold; and determine, when the reference value is greater than a second threshold, that the first hotness information indicates that the target data is hot data, or determine, when the reference value is less than or equal to a third threshold, that the first hotness information indicates that the target data is cold data, wherein the third threshold is less than or equal to the second threshold.

26. The data management apparatus according to claim 24, wherein the management module is configured to: determine historically accessed data as the target data, wherein the target data corresponds to a first address, and the first address is within an address range of the first storage medium; and determine, when duration for which the target data is not accessed reaches a fourth threshold, that the first hotness information indicates that the target data is cold data.

27. The data management apparatus according to any one of claims 24 to 26, wherein the management module is configured to: query an address mapping table according to the first address corresponding to the target data, to obtain a query result; and delete, when the first hotness information indicates that the target data is cold data and the query result indicates that the first address corresponds to a second address in an address range of the first part, the target data cached at the second address; and

the management module is further configured to delete, from the address mapping table, a target mapping relationship between the first address and the second address.

28. The data management apparatus according to claim 27, wherein the management module is configured to: when the first hotness information indicates that the target data is cold data, the query result indicates that the first address corresponds to the second address in the address range of the first part, and the query result further indicates that the target data is dirty data, write the target data cached at the second address into the first address, and then delete the target data cached at the second address.

29. The data management apparatus according to claim 27, wherein the management module is configured to: delete, when the first hotness information indicates that the target data is cold data, the query result indicates that the first address corresponds to the second address in the address range of the first part, and the query result further indicates that the target data is clean data, the target data cached at the second address.

30. The data management apparatus according to claim 24 or 25, wherein the management module is configured to: query an address mapping table according to the first address corresponding to the target data, to obtain a query result; and cache, when the first hotness information indicates that the target data is hot data and the query result indicates that the first address does not correspond to a second address in an address range of the first part, the target data at the second address; and
the management module is further configured to add a target mapping relationship between the first address and the second address to the address mapping table.

31. The data management apparatus according to claim 30, wherein the management module is configured to: add the target mapping relationship to a queue with a lowest priority in a plurality of queues, wherein the target mapping relationship corresponds to second hotness information, and the second hotness information indicates a hot level of the target data; and update a location of the target mapping relationship in the plurality of queues based on an update status of the second hotness information until the target mapping relationship is added to a queue with a highest priority in the plurality of queues, and then add the target mapping relationship to the address mapping table.

32. The data management apparatus according to claim 30, wherein the management module is configured to: obtain a reference mapping relationship from a queue with a lowest priority in a plurality of queues, and replace the reference mapping relationship in the address mapping table with the target mapping relationship, wherein the reference mapping relationship is transferred from a queue with a non-lowest priority in the plurality of queues to the queue with the lowest priority in the plurality of queues.

33. The data management apparatus according to claim 24 or 25, wherein the management module is configured to: query an address mapping table according to the first address corresponding to the target data, to obtain a query result; and continue, when the first hotness information indicates that the target data is hot data and the query result indicates that the first address corresponds to a second address in an address range of the first part, to cache the target data at the second address; and
the management module is further configured to update second hotness information corresponding to a target mapping relationship between the first address and the second address, wherein the second hotness information indicates a hot level of the target mapping relationship.

34. A data management device, wherein the data management device comprises a processor and a data management system, the processor is connected to a controller comprised in the data management system, and the data management system is the data management system according to any one of claims 1 to 11.

35. A controller, wherein the controller is configured to perform the data management method according to any one of claims 12 to 22.

FIG. 1

FIG. 2

FIG. 3

FIG. 4

Obtain target data that needs to be managed — 501

Manage the target data by using a target storage medium, where the target storage medium is a storage medium, corresponding to the target data, in a first storage medium, a first part, and a second part — 502

FIG. 5

Start

Branch 1

Branch 2

Receive a first address

A clock cycle arrives

Does an entry corresponding to the first address exist?

No → Create an entry

Yes → Update the entry

Calculate a reference value

Greater than a second threshold → Target data is hot data

Less than or equal to a third threshold → Target data is cold data

Does duration without access exceed a fourth threshold?

No

Yes → Target data is cold data

FIG. 6

| Valid bit | Address | First hotness information | Quantity of access times | Quantity of storage times | Lifetime |
|---|---|---|---|---|---|

FIG. 7

Start

Is a first address within an address range of a first storage medium?

No (Branch 1)

Yes

Manage target data by using a second part

Query an address mapping table

Does a second address corresponding to the first address exist?

No

Yes

Target data is hot data?

Target data is cold data?

No (Branch 2)

No (Branch 5)

Manage the target data by using the first storage medium

Yes (Branch 3)

Yes (Branch 4)

Update second hotness information of the target data

Cache the target data by using a first part, and add a target mapping relationship to the address mapping table

Delete the target data cached at a first part, and delete a target mapping relationship in the address mapping table

End

FIG. 8

First address

| First block number | Intra-block offset information |
|---|---|

First part

| Second block number | Intra-block offset information |
|---|---|

(+)

| | |
|---|---|
| Block 0 | |
| Block 1 | |

| First block number | Second block number | Valid bit | Hot degree bit | Dirty bit | Count bit |
|---|---|---|---|---|---|
| 63    44 | 43    24 | 23    22 | 12 | 11 | 10    0 |

FIG. 9

EP 4 682 698 A1

High-priority
queue

Medium-priority
queue

Low-priority
queue

Upgrade
mechanism

Degradation
mechanism

Priorities increase

FIG. 10

Data management apparatus

Obtaining module        1101

Management module       1102

FIG. 11

Processor

Controller    Data management system

First storage
medium    First part    Second part

Second storage medium

FIG. 12

## INTERNATIONAL SEARCH REPORT

| International application No. |
| --- |
| **PCT/CN2024/083063** |

| A. | CLASSIFICATION OF SUBJECT MATTER |
| --- | --- |

G06F 3/06(2006.01)i

According to International Patent Classification (IPC) or to both national classification and IPC

| B. | FIELDS SEARCHED |
| --- | --- |

Minimum documentation searched (classification system followed by classification symbols)

IPC: G06F 3/-; G06F 12/-

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 数据, 管理, 第一存储介质, 第二存储介质, 缓存, 速度, 热; data, management, first storage medium, second storage medium, cache, speed, hot, thermal

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 103838681 A (LENOVO (BEIJING) CO., LTD.) 04 June 2014 (2014-06-04) claims 1-12, and description, paragraphs [0026]-[0048], and figures 3-5 | 1, 12, 23, 34-35 |
| Y | CN 103838681 A (LENOVO (BEIJING) CO., LTD.) 04 June 2014 (2014-06-04) claims 1-12, and description, paragraphs [0026]-[0048], and figures 3-5 | 2-11, 13-22, 24-35 |
| Y | CN 113821158 A (HUAWEI TECHNOLOGIES CO., LTD.) 21 December 2021 (2021-12-21) claims 1-18, and description, paragraphs [0013]-[0131] | 2-11, 13-22, 24-35 |
| Y | CN 114253873 A (HUAWEI TECHNOLOGIES CO., LTD.) 29 March 2022 (2022-03-29) claims 1-30, and description, paragraphs [0078]-[0187], and figures 3-10 | 2-11, 13-22, 24-35 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 June 2024** | **12 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/083063**

| Patent document cited in search report | | | Publication date (day/month/year) | Patent family member(s) | | | Publication date (day/month/year) |
|---|---|---|---|---|---|---|---|
| CN | 103838681 | A | 04 June 2014 | CN | 103838681 | B | 27 October 2017 |
| CN | 113821158 | A | 21 December 2021 | None | | | |
| CN | 114253873 | A | 29 March 2022 | WO | 2022062524 | A1 | 31 March 2022 |

Form PCT/ISA/210 (patent family annex) (July 2022)

**EP 4 682 698 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310379505